# EUROPÄISCHE PATENTSCHRIFT

(11) **EP 1 243 773 B1**
(45) Veröffentlichungstag und Bekanntmachung des Hinweises auf die Patenterteilung: **20.10.2004**
(21) Anmeldenummer: 01106804.6
(22) Anmeldetag: 19.03.2001
(51) Int. Cl.: F02B 75/04, F16C 7/06

(54) **Laengenverstellbare Pleuelstange**
Connecting rod with adjustable length
Bielle avec longueur variable

(43) Veröffentlichungstag der Anmeldung: 25.09.2002
(73) Patentinhaber: Ford Global Technologies, Inc., A subsidiary of Ford Motor Company, Dearborn, Michigan 48126 (US)
(72) Erfinder: Linsel, Jens, 50767 Köln (DE); Bartsch, Guenter, 53909 Zuelpich (DE)
(74) Vertreter: Drömer, Hans-Carsten, Dipl.-Ing.

(56) Entgegenhaltungen:
- DE-C- 965 741
- US-A- 2 245 778
- US-A- 4 195 601
- PATENT ABSTRACTS OF JAPAN vol. 2000, no. 01, 31. Januar 2000 (2000-01-31) & JP 11 294210 A (TOYOTA MOTOR CORP), 26. Oktober 1999 (1999-10-26)

## Beschreibung

Die Erfindung betrifft eine längenverstellbare Pleuelstange, enthaltend ein am Kolben einer Brennkraftmaschine zu befestigendes Kolbenteil mit einem Kolbenteilschaft und ein an der Kurbelwelle der Brennkraftmaschine zu befestigendes Wellenteil mit einem Wellenteilschaft, wobei der Kolbenteilschaft und der Wellenteilschaft teleskopartig miteinander verbunden sind.

Pleuel bzw. Pleuelstangen dienen dazu, die Auf- und Abbewegung des Kolbens einer Brennkraftmaschine in eine Rotationsbewegung der Kurbelwelle umzuwandeln. Zu diesem Zweck weisen sie ein oberes Ende mit einem ersten Auge auf, welches an einer Querachse im Kolben gelagert ist, sowie ein unteres Ende mit einem zweiten Auge, das um den Kurbelzapfen einer Kurbelwelle gelagert ist. Herkömmliche Pleuelstangen weisen eine feste Länge auf, so dass zu jeder Winkelposition der Kurbelwelle ein bestimmtes, vom Kolben im Zylinder begrenztes Brennkammervolumen gehört.

Bei längenverstellbaren Pleuelstangen kann dagegen der Abstand zwischen der Befestigung am Kolben und der Befestigung an der Kurbelwelle verändert werden, wodurch sich der Zusammenhang zwischen Kurbelwellenwinkel und Brennkammervolumen verändern lässt. Die Längenverstellung wird insbesondere dazu eingesetzt, das Kompressionsverhältnis des Motors je nach Betriebszustand geeignet anzupassen.

Eine längenverstellbare Pleuelstange der eingangs genannten Art ist aus der US 4 195 601 bekannt. Sie besteht aus einem Kolbenteil, das am Kolben der Brennkraftmaschine befestigt ist, und einem Wellenteil, das um den Kurbelzapfen der Kurbelwelle gelagert ist. Beide Teile haben jeweils sich in Achsrichtung der Pleuelstange erstreckende Schäfte, welche teleskopartig miteinander verbunden sind. Durch eine aufwendige Struktur von ineinandergreifenden Hülsen, Zapfen und Ringen werden zwischen dem Kolbenteil und dem Wellenteil Kammern ausgebildet, deren Volumen sich je nach Ausdehnung der Teleskopverbindung verändert. Ein Teil der Kammern ist über durch die Kurbelwelle und das Wellenteil verlaufende Kanäle für ein Hydraulikmittel mit Druck beaufschlagbar. Je nach Höhe dieses Druckes relativ zu dem Druck, der in der Brennkammer auf den Kolben einwirkt, kann eine Verlängerung oder Verkürzung der Teleskopverbindung erreicht werden. Nachteilig bei diesem System ist, dass verhältnismäßig hohe Drükke des Hydraulikmittels angewendet werden müssen, um die Pleuelstange zu bewegen. Eine Fixierung der Position der Pleuelstange erfolgt durch Verschließen der Kanäle für das Hydraulikmittel. Dabei steht jedoch das Hydrauliksystem unter einem hohen statischen Druck, welcher entsprechend hohe Anforderungen an die Dichtungen stellt.

Ein ähnliches System ist weiterhin aus der US 4 140 091 bekannt. Auch hier wird eine Längenveränderung der Pleuelstange durch Anwendung eines hydraulischen Druckes erzeugt, wobei die Pleuelstange nach dem Prinzip einer Kolbenstange in einem Zylinder ausgebildet ist.

Des weiteren ist aus der WO 95/08705 eine längenverstellbare Pleuelstange bekannt, bei welcher das obere Ende der Pleuelstange über eine exzentrisch gelagerte Scheibe am Kolben befestigt ist. Ferner bewirkt eine mit der Scheibe, dem Kolben und der Pleuelstange in Verbindung stehende Stange, dass sich die Exzenterscheibe in Abhängigkeit vom Kurbelwellenwinkel dreht. Bei diesem System besteht somit eine festgelegte Beziehung zwischen dem Kurbelwellenwinkel und der effektiven Länge der Pleuelstange. Eine Verstellung der Pleuelstange in Abhängigkeit vom Betriebszustand des Motors ist nicht möglich.

Vor diesem Hintergrund war es Aufgabe der vorliegenden Erfindung, eine Pleuelstange verstellbarer Länge bereitzustellen, welche eine vereinfachte Konstruktion und eine größere Betriebssicherheit aufweist.

Diese Aufgabe wird durch eine Pleuelstange mit den Merkmalen des Anspruchs 1 gelöst. Vorteilhafte Ausgestaltungen sind in den Unteransprüchen enthalten.

Die Pleuelstange enthält demnach ein Kolbenteil, das (schwenk-)beweglich am Kolben einer Brennkraftmaschine zu befestigen ist und einen sich in Achsrichtung der Pleuelstange erstreckenden Kolbenteilschaft aufweist. Ferner enthält sie ein Wellenteil, das an der Kurbelwelle beziehungsweise dem Kurbelzapfen der Kurbelwelle der Brennkraftmaschine drehbar zu befestigen ist und einen sich in Achsrichtung der Pleuelstange erstreckenden Wellenteilschaft aufweist. Der Kolbenteilschaft und der Wellenteilschaft sind teleskopartig miteinander verbunden, so dass über Verkürzung oder Verlängerung dieser Teleskopverbindung eine Längenveränderung der Pleuelstange erreicht werden kann.

Die Pleuelstange ist dadurch gekennzeichnet, dass eine Arretiereinrichtung vorhanden ist, mit der der Kolbenteilschaft und der Wellenteilschaft in mindestens zwei verschiedenen Positionen relativ zueinander mechanisch arretiert werden können. Durch die Arretierung zwischen dem Kolbenteilschaft und dem Wellenteilschaft wird eine mechanische Verbindung hergestellt, welche die großen axialen Kraftbelastungen der Pleuelstange aufnimmt. Das hat den Vorteil, dass diese Kräfte nicht mehr zu einem hohen statischen Druck in einem Hydraulikmedium führen, dessen Gegendruck und Dichtheit die Längenkonstanz der Pleuelstange sicherstellen muss. Dementsprechend müssen keine aufwendig herzustellenden, besonders druckfesten Hydraulikkammem und -dichtungen vorgesehen werden. Weiterhin hat der Einsatz von Arretiervorrichtungen den Vorteil, dass diese flexibler betätigt werden können, so dass eine Längenverstellung der Pleuelstange nicht nur bei konstruktiv fest vorgegebenen Kurbelwellenwinkeln möglich ist.

Die Teleskopverbindung zwischen dem Kolbenteil und dem Wellenteil wird vorzugsweise dadurch erreicht, dass einer der Schäfte, bei dem es sich insbesondere um den Kolbenteilschaft handeln kann, eine sich axial erstreckende Führungskammer enthält, in welcher der zweite Schaft (Wellenteilschaft) verschiebebeweglich gelagert ist. Der zweite Schaft stellt somit eine Art Kolbenstange dar, welche in der Führungskammer des ersten Schaftes gelagert ist. Der Querschnitt der Führungskammer kann dabei kreisförmig oder auch eckig, insbesondere rechteckig sein. Die erläuterte Ausbildung der Teleskopverbindung hat den Vorteil, dass sie zum einen einfach herstellbar und zum anderen besonders stabil und funktionssicher ist.

Gemäß einer bevorzugten Ausgestaltung der Erfindung enthält die Arretiereinrichtung mindestens einen Bolzen, welcher im Kolbenteilschaft oder im Wellenteilschaft quer zur Schaftachse verschiebebeweglich gelagert ist. Die Verschiebung des Bolzens ist dabei zwischen einer Verriegelungsposition und einer Entriegelungsposition möglich, wobei der Bolzen in der Verriegelungsposition in eine Ausnehmung am anderen Schaft eingreift, während er in der Entriegelungsposition nicht in diese Ausnehmung eingreift. In der Verriegelungsposition stellt der Bolzen eine Kopplung zwischen den beiden Schäften her, so dass die axiale Verschiebbarkeit der Schäfte aufgehoben ist. Alle in Axialrichtung auf die Pleuelstange einwirkenden Kräfte werden über den Bolzen von einem Schaft auf den anderen übertragen. Durch eine entsprechende Ausbildung des Bolzens und seiner Führungen kann für die notwendige Stabilität dieser Kopplung gesorgt werden. Die Lagerung des Bolzens quer zur Schaftachse hat den Vorteil, dass bei seiner Verschiebung nicht gegen die in Achsrichtung der Pleuelstange wirkenden Belastungen gearbeitet werden muss. Die Umschaltung des Bolzens zwischen der Verriegelungsposition und der Entriegelungsposition kann daher unter Aufwendung verhältnismäßig kleiner Kräfte vorgenommen werden.

Bei der zuletzt genannten Ausgestaltung werden die Bolzen vorzugsweise durch ein elastisches Element bzw. eine Feder in eine ihrer beiden möglichen Positionen vorgespannt. Vorzugsweise handelt es sich dabei um die Verriegelungsposition. Durch die Vorspannung mittels einer Feder wird erreicht, dass zur Bewegung der Bolzen von außen nur Kraft in einer Richtung ausgeübt werden muss. In der entgegengesetzten Richtung wird die Bewegungskraft dagegen von der Feder aufgebracht, welche sich kompakt unmittelbar am Bolzen anordnen lässt. Eine Vorspannung speziell in die Verriegelungsposition hat den Vorteil, dass die Pleuelstange dazu tendiert, einen stabilen Zustand mit arretierter Länge anzunehmen. Dies erhöht die Zuverlässigkeit des Systems gegenüber Störungen in dem von außen wirkenden Stellmechanismus für die Bolzen.

Gemäß einer weiteren Ausgestaltung der Arretiereinrichtung mit Bolzen und Ausnehmungen weist der Kolbenteilschaft oder der Wellenteilschaft mindestens eine sich quer zur Schaftachse erstreckende Bohrung auf, in welcher zwei Bolzen so gelagert sind, dass sie in entgegengesetzte Richtungen aus je einem Ende der Bohrung heraustreten können. Diese Anordnung hat den Vorteil, dass eine zur Achse der Pleuelstange symmetrische Verriegelung zwischen den Schäften von Kolbenteil und Wellenteil erreicht wird, so dass eine gleichmäßige Kraftübertragung erfolgt.

Bei der zuletzt genannten Anordnung kann sich zwischen den beiden Bolzen eine Feder befinden, welche die Bolzen auseinander drückt. Durch die Feder werden die Bolzen somit tendenziell aus der Bohrung heraus und in eine Ausnehmung im anderen Schaft hinein gedrückt, das heißt in die Verriegelungsposition.

Vorzugsweise sind elektrische oder hydraulische Einrichtungen vorhanden, mit welchen die Bolzen von der Verriegelungsposition in die Entriegelungsposition überführt werden können. Durch Betätigung dieser Einrichtungen kann somit die Arretierung aufgehoben werden, um die Länge der Pleuelstange verstellen zu können. Eine Bewegung der Bolzen in umgekehrter Richtung, das heißt von der Entriegelungsposition in die Verriegelungsposition, kann ebenfalls durch die genannten elektrischen oder hydraulischen Einrichtungen erfolgen, oder es kann wie oben erwähnt eine in diese Richtung wirkende Federvorspannung der Bolzen vorliegen.

Für die Realisierung einer hydraulischen Betätigung der Arretiereinrichtung ist im Wellenteil vorzugsweise mindestens ein Zufuhrkanal für ein Hydraulikmittel vorgesehen, welcher mit einer Ausnehmung in fluider Kommunikation steht, wenn Kolbenteil und Wellenteil eine derartige Relativposition haben, dass in die genannte Ausnehmung ein Bolzen des Kolbenteils eingreift oder eingreifen kann. Im Folgenden sei ohne Beschränkung der Allgemeinheit angenommen, dass die Ausnehmung im Kolbenteil und der Bolzen im Wellenteil angeordnet ist. Wenn der Bolzen des Wellenteilschaftes in die Ausnehmung eingreift, besteht eine Verriegelung zwischen dem Kolbenteilschaft und dem Wellenteilschaft. Diese Verriegelung kann über die Kommunikation des Zufuhrkanals mit der Ausnehmung aufgehoben werden, indem ein Hydraulikmittel (Flüssigkeit oder Gas) unter Druck über den Zufuhrkanal zugeführt wird, wodurch in der Ausnehmung ein entsprechender Druck aufgebaut wird. Dieser Druck in der Ausnehmung wirkt auf den dort befindlichen Bolzen ein und zwingt ihn zur Bewegung aus der Ausnehmung heraus, das heißt in seine Entriegelungsposition. Sobald der Bolzen die Ausnehmung vollständig verlassen hat, ist die Verriegelung zwischen den Schäften aufgehoben, und die Länge der Pleuelstange kann verstellt werden.

Gemäß einer Weiterbildung der Erfindung können das Kolbenteil und das Wellenteil Anlageflächen aufweisen, welche so ausgebildet und angeordnet sind, dass sie in Kontakt stehen und in axialer Richtung Kräfte übertragen, wenn das Kolbenteil und das Wellenteil eine verriegelbare Relativposition annehmen. Das hat den Vorteil, dass die in Axialrichtung von der Pleuelstange zu übertragenden Kräfte nicht allein durch die Arretiereinrichtung vom Kolbenteil auf das Wellenteil übertragen werden müssen, sondern dass die genannten Anlageflächen hierbei einen erheblichen Teil der Last übernehmen. Dementsprechend kann die Arretiereinrichtung leichter und einfacher ausgebildet werden.

Im Folgenden wird die Erfindung mit Hilfe der Figuren beispielhaft erläutert. Es zeigt:
- Fig. 1: eine perspektivische Ansicht auf eine längenverstellbare Pleuelstange;
- Fig. 2: die Pleuelstange in einem Querschnitt;
- Fig. 3: die Pleuelstange in einer seitlichen perspektivischen Ansicht mit teilweise entfernten Teilen, die einen Blick auf die Arretiereinrichtung freigeben;
- Fig. 4: eine vergrößerte perspektivische und teilweise transparente Ansicht der Arretiereinrichtung;
- Fig. 5: eine Draufsicht der Pleuelstange; und
- Fig. 6: eine vergrößerte Draufsicht auf die Arretiereinrichtung der Pleuelstange.

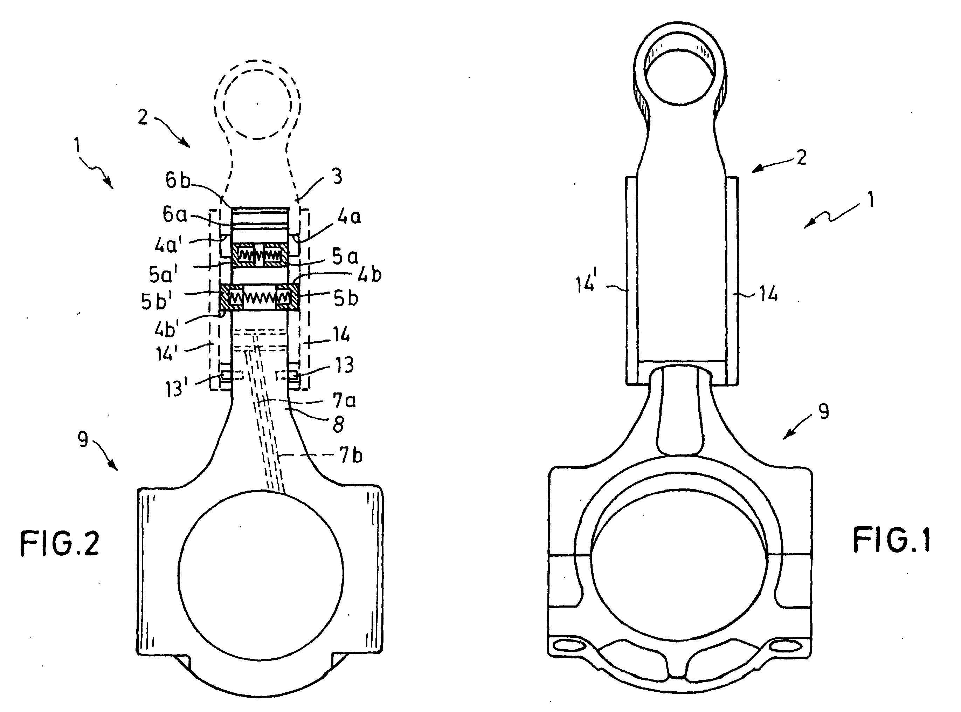

In Figur 1 ist eine erfindungsgemäße Kolbenstange 1 in einer perspektivischen Ansicht dargestellt. Zu erkennen ist, dass die Kolbenstange aus einem Kolbenteil 2 und einem Wellenteil 9 besteht, die mit ihren einander zugewandten Schäften teleskopartig ineinander stecken. Das in Figur 1 oben befindliche Kolbenteil 2 kann in bekannter Weise am Kolben (nicht dargestellt) einer Brennkraftmaschine schwenkbeweglich angeordnet werden, und das untere Wellenteil 9 drehbeweglich am Kurbelzapfen einer Kurbelwelle. Durch die Veränderung der Länge der Pleuelstange kann Einfluss auf das Kompressionsverhältnis in der Brennkammer des Verbrennungsmotors genommen werden, so dass dieses optimal an die jeweiligen Betriebsbedingungen des Motors angepasst werden kann. Die zweiteilige Ausbildung der Pleuelstange hat dabei den Vorteil, dass das obere und untere Pleuellager in herkömmlicher Art und Weise ausgeführt werden können, so dass sich das Pleuel im üblichen Fertigungs- und Montageprozess einsetzen lässt. Der in dem Schaft der Pleuelstange ausgebildete Schaltmechanismus zur Längenverstellung und zur Längenarretierung erlaubt es, den Abstand zwischen dem oberen und unteren Pleuellager zwischen mindestens zwei Positionen zu variieren, wobei durch die kompakte und voll integrierte Bauweise ein vollständig externer Funktionstest möglich ist.

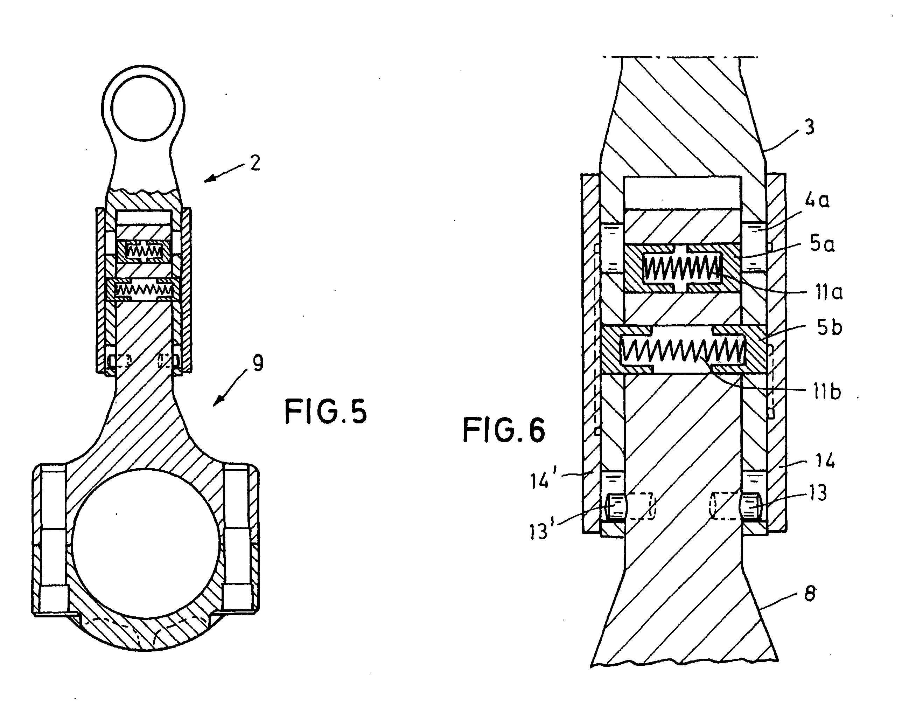

In den Figuren 2 bis 6 ist die vordere Abdeckplatte 14 des Kolbenteils 2 teilweise weggelassen worden beziehungsweise transparent gezeichnet, so dass die Arretiereinrichtung zur Verriegelung bestimmter Positionen der Pleuelstange besser erkennbar wird. In dem dargestellten Ausführungsbeispiel sind zwei verschiedene Längen der Pleuelstange arretierbar. Der Wellenteilschaft 8 weist dazu zwei axial beabstandete Querbohrungen auf, wobei in der oberen Querbohrung zwei Bolzen 5a und 5a' und in der unteren Querbohrung zwei Bolzen 5b und 5b' spiegelbildlich angeordnet sind. Zwischen den Bolzen eines Paares befindet sich jeweils mindestens eine Feder 11a beziehungsweise 11b (Fig. 6), welche die beiden Bolzen in entgegengesetzte Richtungen auseinander drückt. Unter der Federwirkung tendieren die Bolzen dazu, aus dem Wellenteilschaft 8 seitlich herauszutreten. Dieses Heraustreten ist jedoch nur dann möglich, wenn den Bolzen eine der Ausnehmungen 4a, 4a', 4b, 4b' gegenübersteht, welche im Kolbenteilschaft 3 ausgebildet sind.

In den Figuren (zum Beispiel Figur 2) ist die Situation dargestellt, dass die unteren Ausnehmungen 4b, 4b' sich auf der axialen Höhe der unteren Bolzen 5b, 5b' befinden, so dass diese Bolzen unter Wirkung der Federn 11b in die Ausnehmungen vorgeschoben werden können. Durch dieses Vorstrecken der Bolzen 5b, 5b' wird eine Verbindung zwischen den Ausnehmungen 4b, 4b' und der Bohrung im Wellenteilschaft 8 hergestellt, welche das Wellenteil 9 mit dem Kolbenteil 2 in der eingestellten Länge verriegelt.

Bei der in den Figuren dargestellten Verriegelung der Pleuelstange in der längeren Position befindet sich das obere Bolzenpaar 5a, 5a' nicht in Eingriff mit den zugehörigen Ausnehmungen 4a, 4a' am Kolbenteilschaft 3. Die Bolzen 5a, 5a' sind vielmehr unter Kompression der Feder 11a in den Wellenteilschaft 8 hineingedrückt, das heißt, sie befinden sich in ihrer Entriegelungsposition.

Für eine Längenveränderung (in den Figuren eine Verkürzung) der Pleuelstange 1 ist es erforderlich, das untere Bolzenpaar 5b, 5b' in seine Entriegelungsposition zu überführen. Dazu müssen sich die Bolzen 5b, 5b' aus den Ausnehmungen 4b, 4b' in den Wellenteilschaft 8 zurückzuziehen, woraufhin sich das Wellenteil 9 zum Beispiel unter Ausnutzung vorhandener Gaskräfte beziehungsweise Fliehkräfte tiefer in das Kolbenteil 2 hinein schiebt, bis das obere Bolzenpaar 5a, 5a' sich auf Höhe der oberen Ausnehmungen 4a, 4a' befindet und die Bolzen 5a, 5a' unter Wirkung der Feder 11a in diese Ausnehmungen hineingedrückt werden. Nach Hineindrücken der Bolzen in die Ausnehmungen ist die Pleuelstange in ihrer verkürzten Länge arretiert, bis wiederum durch eine aktive Betätigung die Bolzen 5a, 5a' aus den Ausnehmungen 4a, 4a' zurückgezogen werden und der oben geschilderte Vorgang umgekehrt wird.

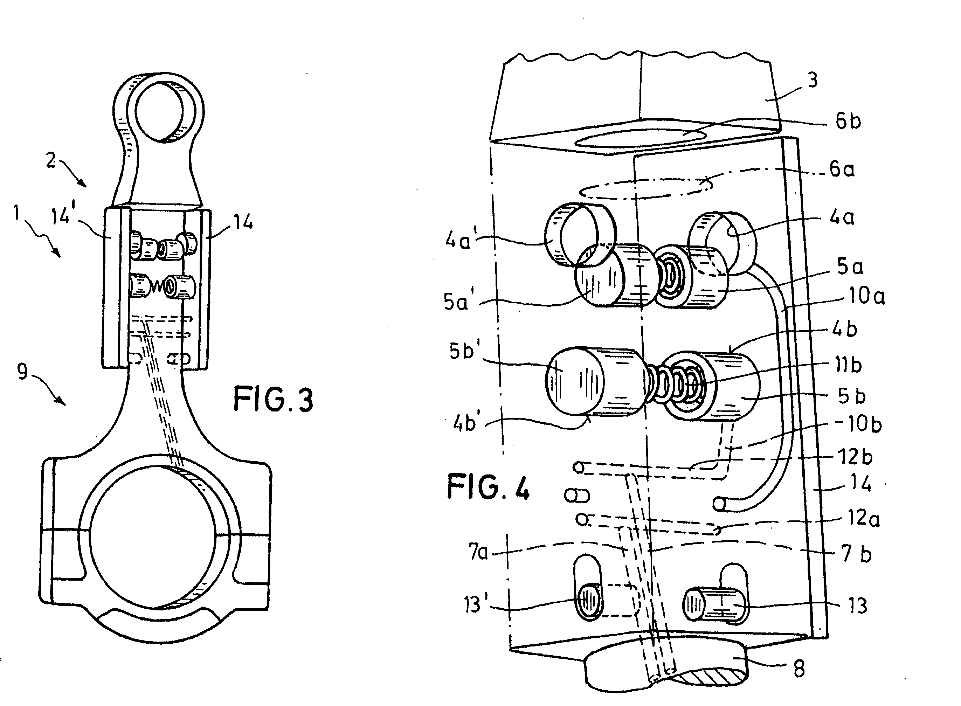

Die Überführung der Bolzen 5a, 5a' beziehungsweise 5b, 5b' aus der vorgeschobene Verriegelungsposition in die zurückgezogene Entriegelungsposition kann zum Beispiel durch elektrische Vorrichtungen erfolgen. In den Figuren dargestellt ist jedoch eine hydraulische Betätigung, bei welcher den oberen Ausnehmungen 4a, 4a' beziehungsweise den unteren Ausnehmungen 4b, 4b' gezielt ein Fluid (Gas oder Flüssigkeit) unter erhöhtem Druck zugeführt werden kann, so dass durch diesen Druck die eventuell in diesen Ausnehmungen befindlichen Bolzen 5a, 5a' oder 5b, 5b' in ihre Entriegelungsposition zurückgedrängt werden. Wie insbesondere aus Figur 4 erkennbar ist, sind zu diesem Zweck im Wellenteilschaft 8 zwei Zufuhrkanäle 7a, 7b vorgesehen, welche mit einer Ringnut auf dem Kurbelzapfen der Kurbelwelle (nicht dargestellt) in Verbindung stehen. Über entsprechende Zuleitungen in der Kurbelwelle kann den Zufuhrkanälen 7a, 7b somit ein Hydraulikmedium vorgegebenen Druckes zugeführt werden.

Wie weiterhin insbesondere aus Figur 4 erkennbar ist, steht das Ende des Zufuhrkanals 7b mit einer Querbohrung 12b im Wellenteilschaft 8 in Verbindung, welche zugeführtes Hydraulikmedium zu beiden Seiten des Wellenteilschaftes nach außen führt. Die in Figur 4 rechte Austrittsöffnungen dieser Querbohrung 12b liegt auf der Höhe der Einlassöffnung des Kanals 10b, der im Kolbenteilschaft 3 ausgebildet ist und zu der unteren Ausnehmung 4b führt. Spiegelbildlich hierzu führt vom anderen Ende der Querbohrung 12b ein Kanal 10b' (nicht dargestellt) zur Ausnehmung 4b'. Über den Kanal 12b kann somit das Hydraulikmedium den Ausnehmungen 4b, 4b' zugeführt werden, wo es Druck auf die Bolzen 5b, 5b' ausüben kann, um diese in ihre Entriegelungsposition zurückzudrängen.

Nach Entriegelung der unteren Bolzen 5b, 5b' kann sich das Kolbenteil 2 unter Verkürzung der Pleuelstange nach unten bewegen, bis die oberen Bolzen 5a, 5a' auf die Höhe der zugehörigen Ausnehmungen 4a, 4a' kommen. Sobald diese Höhe erreicht ist, treten die oberen Bolzen 5a, 5a' unter der Wirkung der Feder 11a aus dem Wellenteilschaft 8 hervor und greifen in die oberen Ausnehmungen 4a, 4a' ein. Dadurch werden Kolbenteil 2 und Wellenteil 9 miteinander in der verkürzten Position verriegelt.

Wie aus Figur 4 erkennbar ist, wird bei einer Relativverschiebung zwischen dem Kolbenteilschaft 3 und dem Wellenteilschaft 8 die Verbindung zwischen der Querbohrung 12b und dem Kanal 10b unterbrochen. Die unteren Ausnehmungen 4b, 4b' werden somit nicht mehr mit Hydraulikmedium beaufschlagt. Bei Erreichen der verkürzten verriegelbaren Position kommt jedoch die Querbohrung 12a des zweiten Zufuhrkanals 7a auf der Höhe des Einlasses des Kanals 10a zu liegen, welche in der Wand des Kolbenteilschaftes 3 ausgebildet ist und zur oberen Ausnehmung 5a führt. In diesem Falle kann also über den zweiten Zufuhrkanal 7a, die Querbohrung 12a und den Verbindungskanal 10a den oberen Ausnehmungen 4a, 4a' Hydraulikmedium unter Druck zugeführt werden, wodurch die sich dort befindlichen Bolzen 5a, 5a' in ihre Entriegelungsposition zurückgedrängt werden können.

Die Druckansteuerung des dargestellten Arretiermechanismus erfolgt somit über einen oder mehrere Zuführungskanäle mit integrierten Verteilungsgalerien, welche je nach Schaltposition die benötigten Kanäle freigeben. Wenn nur eine Zuführungsbohrung benutzt wird, ist ein Schutz gegen ein vorzeitiges Zurückschalten des Systems vorzusehen.

Damit nicht die gesamten axialen Kräfte, die von der Pleuelstange 1 zu übertragen sind, über die Bolzen 5a, 5a' beziehungsweise 5b, 5b' vom Kolbenteil 2 auf das Wellenteil 9 übertragen werden müssen, können Anlageflächen 6 (Figur 2) vorgesehen sein. Derartige Anlageflächen sind am Kolbenteil 2 einerseits und am Wellenteil 9 andererseits ausgebildet und kommen in den verriegelbaren Positionen der Teile in Kontakt, so dass über diese fest angeordneten Flächen eine zuverlässige Kraftübertragung stattfinden kann. Weiterhin werden zum Schutz gegen ein ungewolltes Trennen von Kolbenteil 2 und Wellenteil 9 diese vorzugsweise mit entsprechenden Sicherungsvorrichtungen versehen.

## Patentansprüche

1. Längenverstellbare Pleuelstange (1), enthaltend ein am Kolben einer Brennkraftmaschine zu befestigendes Kolbenteil (2) mit einem Kolbenteilschaft (3) und ein an der Kurbelwelle der Brennkraftmaschine zu befestigendes Wellenteil (9) mit einem Wellenteilschaft (8), wobei der Kolbenteilschaft und der Wellenteilschaft teleskopartig miteinander verbunden sind,
**dadurch gekennzeichnet, dass** eine Arretiereinrichtung vorhanden ist, mit der der Kolbenteilschaft (3) und der Wellenteilschaft (8) in mindestens zwei verschiedenen Positionen relativ zueinander arretiert werden können.

2. Pleuelstange nach Anspruch 1,
**dadurch gekennzeichnet, dass** einer der Schäfte, vorzugsweise der Kolbenteilschaft (3), eine sich axial erstreckende Führungskammer enthält, in welcher der zweite Schaft (8) verschiebebeweglich gelagert ist.

3. Pleuelstange nach einem der Ansprüche 1 oder 2,
**dadurch gekennzeichnet, dass** die Arretiereinrichtung mindestens einen Bolzen (5a, 5a', 5b, 5b') enthält, welcher im Kolbenteilschaft oder im Wellenteilschaft (8) quer zur Schaftachse verschiebebeweglich zwischen einer Verriegelungsposition, in welcher er in eine Ausnehmung (4a, 4a', 4b, 4b') am anderen Schaft (3) eingreift, und einer Entriegelungsposition, in welcher er nicht in die genannte Ausnehmung eingreift, gelagert ist.

4. Pleuelstange nach Anspruch 3,
**dadurch gekennzeichnet, dass** der Bolzen (5a, 5a', 5b, 5b') durch eine Feder (11a, 11b) in eine Endposition, vorzugsweise in die Verriegelungsposition, vorgespannt wird.

5. Pleuelstange nach einem der Ansprüche 3 oder 4,
**dadurch gekennzeichnet, dass** der Kolbenteilschaft oder der Wellenteilschaft (8) mindestens eine sich quer zur Schaftachse erstreckende Bohrung aufweist, in welcher zwei in entgegengesetzte Richtungen verschiebebewegliche Bolzen (5a, 5a'; 5b, 5b') gelagert sind.

6. Pleuelstange nach Anspruch 5,
**dadurch gekennzeichnet, dass** die Bolzen (5a, 5a'; 5b, 5b') durch eine sie auseinander drückende Feder (11a; 11b) gekoppelt sind.

7. Pleuelstange nach mindestens einem der Ansprüche 3 bis 6,
**dadurch gekennzeichnet, dass** der Bolzen (5a, 5a', 5b, 5b') durch elektrische oder hydraulische Kräfte von der Verriegelungsposition in die Entriegelungsposition überführt werden kann.

8. Pleuelstange nach mindestens einem der Ansprüche 3 bis 7,
**dadurch gekennzeichnet, dass** im Wellenteil (9) mindestens ein Zufuhrkanal (7a; 7b) vorgesehen ist, welcher mit der am Kolbenteil (2) angeordneten Ausnehmung (4a, 4a'; 4b, 4b') in Kommunikation steht, wenn Kolbenteil und Wellenteil (8) eine derartige Relativposition annehmen, dass in die Ausnehmung ein Bolzen (5a, 5a'; 5b, 5b') des Kolbenteils eingreifen kann.

9. Pleuelstange nach mindestens einem der Ansprüche 1 bis 8,
**dadurch gekennzeichnet, dass** Kolbenteil (2) und Wellenteil (9) Anlageflächen (6) aufweisen, welche in axialer Richtung kraftübertragend in Kontakt stehen, wenn Kolbenteil und Wellenteil eine verriegelbare Relativposition annehmen.

10. Pleuelstange nach mindestens einem der Ansprüche 1 bis 9,
**dadurch gekennzeichnet, dass** sie mit Sicherheitseinrichtungen (13) versehen sind, die ein ungewolltes Trennen von Kolbenteil (2) und Wellenteil (9) verhindern.

## Claims

1. Length-adjustable connecting rod (1), comprising a piston part (2), to be attached to the piston of an internal combustion engine and having a piston part skirt (3), and a shaft part (9), to be attached to the crankshaft of the internal combustion engine and having a shaft part skirt (8), the piston part skirt and the shaft part skirt being telescopically connected together,
**characterized in that** an arresting device is provided, by means of which the piston part skirt (3) and the shaft part skirt (8) can be arrested in at least two different positions in relation to one another.

2. Connecting rod according to Claim 1,
**characterized in that** one of the skirts, preferably the piston part skirt (3), comprises an axially extending guide chamber, in which the second skirt (8) is displaceably supported.

3. Connecting rod according to one of Claims 1 or 2,
**characterized in that** the arresting device comprises at least one pin (5a, 5a', 5b, 5b'), which is supported in the piston part skirt or in the shaft part skirt (8) so that it is displaceable transversely to the skirt axis between a locking position, in which it engages in a recess (4a, 4a', 4b, 4b') on the other skirt (3), and an unlocked position, in which it does not engage in said recess.

4. Connecting rod according to Claim 3,
**characterized in that** the pin (5a, 5a', 5b, 5b') is preloaded by a spring (11a, 11b) into a limit position, preferably into the locking position.

5. Connecting rod according to one of Claims 3 or 4,
**characterized in that** the piston part skirt or the shaft part skirt (8) has at least one bore extending transversely to the skirt axis and in which two pins (5a, 5a'; 5b, 5b'), displaceable in opposite directions, are supported.

6. Connecting rod according to Claim 5,
**characterized in that** the pins (5a, 5a'; 5b, 5b') are coupled by a spring (11a; 11b) pushing them apart.

7. Connecting rod according to at least one of Claims 3 to 6,
**characterized in that** the pin (5a, 5a', 5b, 5b') can be moved from the locking position into the unlocked position by electrical or hydraulic forces.

8. Connecting rod according to at least one of Claims 3 to 7,
**characterized in that** at least one feed duct (7a; 7b) is provided in the shaft part (9), the duct being connected to the recess (4a, 4a'; 4b, 4b') arranged on the piston part (2) when piston part and shaft part (8) assume a relative position such that a pin (5a, 5a'; 5b, 5b') of the piston part can engage in the recess.

9. Connecting rod according to at least one of Claims 1 to 8,
**characterized in that** piston part (2) and shaft part (9) have bearing surfaces (6), which in an axial direction are in force-transmitting contact when piston part and shaft part assume a lockable relative position.

10. Connecting rod according to at least one of Claims 1 to 9,
**characterized in that** it is provided with safety devices (13), which prevent accidental separation of piston part (2) and shaft part (9).

## Revendications

1. Bielle de longueur variable (1) contenant une partie de piston (2) devant être fixée sur le piston d'un moteur à combustion interne avec une tige de partie de piston (3) et une partie d'arbre (9) devant être fixée au vilebrequin du moteur à combustion interne avec une tige de partie d'arbre (8), la tige de partie de piston et la tige de partie d'arbre étant connectées l'une à l'autre de manière télescopique, **caractérisée en ce que** l'on prévoit un dispositif de blocage avec lequel la tige de partie de piston (3) et la tige de partie d'arbre (8) peuvent être bloquées l'une par rapport à l'autre dans au moins deux positions différentes.

2. Bielle selon la revendication 1,
**caractérisée en ce que** l'une des tiges, de préférence la tige de partie de piston (3) comprend une chambre de guidage s'étendant axialement dans laquelle est montée la deuxième tige (8) de manière à pouvoir se déplacer par coulissement.

3. Bielle selon l'une quelconque des revendications 1 ou 2,
**caractérisée en ce que** le dispositif de blocage comprend au moins un goujon (5a, 5a', 5b, 5b') qui est monté dans la tige de partie de piston ou dans la tige de partie d'arbre (8) de manière déplaçable par coulissement transversalement à l'axe de la tige entre une position de verrouillage dans laquelle il vient en prise dans un évidement (4a, 4a', 4b, 4b') sur l'autre tige (3) et une position de déverrouillage dans laquelle il ne vient pas en prise dans ledit évidement.

4. Bielle selon la revendication 3,
**caractérisée en ce que** le goujon (5a, 5a', 5b, 5b') est précontraint par un ressort (11a, 11b) dans une position terminale, de préférence dans la position de verrouillage.

5. Bielle selon l'une quelconque des revendications 3 ou 4,
**caractérisée en ce que** la tige de partie de piston ou la tige de partie d'arbre (8) présente au moins un alésage s'étendant transversalement à l'axe de la tige, dans lequel sont montés deux goujons (5a, 5a', 5b, 5b') déplaçables par coulissement dans des directions opposées.

6. Bielle selon la revendication 5,
**caractérisée en ce que** les goujons (5a, 5a', 5b, 5b') sont accouplés par un ressort (11a, 11b) les écartant l'un de l'autre.

7. Bielle selon au moins l'une quelconque des revendications 3 à 6,
**caractérisée en ce que** le goujon (5a, 5a', 5b, 5b') peut être transféré par des forces électriques ou hydrauliques de la position de verrouillage dans la position de déverrouillage.

8. Bielle selon au moins l'une quelconque des revendications 3 à 7,
**caractérisée en ce que** l'on prévoit dans la partie d'arbre (9) au moins un conduit d'alimentation (7a, 7b) qui est en communication avec l'évidement (4a, 4a', 4b, 4b') disposé sur la partie de piston (2), lorsque la partie de piston et la partie d'arbre (8) adoptent une position relative telle qu'un goujon (5a, 5a', 5b, 5b') de la partie de piston puisse venir en prise dans l'évidement.

9. Bielle selon au moins l'une quelconque des revendications 1 à 8,
**caractérisée en ce que** la partie de piston (2) et la partie d'arbre (9) présentent des faces d'appui (6) qui sont en contact de transfert de force dans la direction axiale lorsque la partie de piston et la partie d'arbre adoptent une position relative verrouillable.

10. Bielle selon au moins l'une quelconque des revendications 1 à 9,
**caractérisée en ce qu'**elle est pourvue de dispositifs de sécurité (13) qui empêchent une séparation indésirable de la partie de piston (2) et de la partie d'arbre (9).
